Europäisches Patentamt

European Patent Office

Office européen des brevets

(11) Publication number: **0 013 834**

**B1**

(12) **EUROPEAN PATENT SPECIFICATION**

(45) Date of publication of patent specification: **20.03.85**

(21) Application number: **79303057.8**

(22) Date of filing: **28.12.79**

(51) Int. Cl.⁴: **B 01 D 13/04,** B 01 D 13/00, C 10 G 73/08

(54) Method of converting a hydrophilic, water-containing regenerated cellulose membrane to a membrane useful for separating organic liquids.

(30) Priority: **28.12.78 US 973966**
**28.12.78 US 973967**
**28.12.78 US 974078**
**28.12.78 US 974079**

(43) Date of publication of application:
**06.08.80 Bulletin 80/16**

(45) Publication of the grant of the patent:
**20.03.85 Bulletin 85/12**

(84) Designated Contracting States:
**DE FR GB IT NL**

(56) References cited:
**DE-A-2 144 028**
**FR-A-2 003 796**
**FR-A-2 271 282**
**GB-A-1 032 355**
**US-A-1 350 532**
**US-A-3 223 614**

**Perryl Oss Prospress in Separation and Purification Vol. 3, Wiley-Interscience 1970, Pages 105, 106, 122-124**

(73) Proprietor: **Exxon Research and Engineering Company**
**P.O.Box 390 180 Park Avenue**
**Florham Park New Jersey 07932 (US)**

(72) Inventor: **Thompson, John Arthur**
**581 Zone Street**
**Wyoming, Ontario (CA)**
Inventor: **Shaw, David Henry**
**55 Mockingbird Lane, RRI**
**Camlachie, Ontario (CA)**
Inventor: **Gudelis, David Arvydas**
**1230 Sherwood Trail**
**Sarnia, Ontario (CA)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

## Description

This invention relates to a method of converting a hydrophilic, water-containing membrane to a membrane useful for separating organic liquids. More particularly, this invention relates to a process for converting semipermeable membranes made from regenerated cellulose to membranes useful for organic liquid separation. Still more particularly, this invention relates to converting hydrophilic membranes made from regenerated cellulose to membranes useful for organic liquid separation by permeating a water-containing membrane with a sequential series of solvents of decreasing polarity, under pressure, to successively displace the water in the membrane with each of said solvents ultimately ending with a solvent miscible with the organic liquid to be selectively permeated through the membrane.

It also relates to a method for separating certain selected organic liquids from mixtures thereof with other organic liquid materials by contacting the mixture, under pressure, with one side of the semipermeable, regenerated cellulose membrane, as modified by the previously recited technique. The membrane preferentially permeates the selected solvent through the membrane to produce a permeate richer in said selected solvent and a retentate leaner in said solvent than the original mixture.

This selected solvent separation process has particular application in solvent dewaxing processes wherein a waxy hydrocarbon oil is mixed with a dewaxing solvent to form a slurry comprising solid wax particles and a mixture of dewaxed oil and solvent wherein said slurry is passed to filtration means for separating the wax from the dewaxed oil/solvent mixture and the dewaxed oil/solvent filtrate is separated by contacting, under pressure, with the previously recited modified regenerated cellulose membrane. At least a portion of the dewaxing solvent permeates through the membrane to form a permeate richer in the dewaxing solvent and a retentate leaner in the solvent than the original filtrate. The thus recovered dewaxing solvent permeate is recycled to the dewaxing operation, the retentate being passed to conventional solvent/oil separation means.

In a more particular application solvent used to recover foots oil from slack wax may also be recovered using the selectively permeable modified regenerated cellulose membrane. Slack wax is heated and mixed with solvent which dissolves the foots oil, resulting in a slurry comprising wax and solvent/foots oils. The wax is separated by filtration from the solvent/foots oil and solvent is recovered by contacting the solvent/foots oil filtrate, under pressure, with one side of the modified semipermeable membrane which selectively permeates the solvent from the foots oil.

Description of the prior art

It is well known in the art to use semipermeable membranes for hydrocarbon separation processes. Such processes are often referred to as reverse osmosis or ultrafiltration processes. In such processes, the feed, comprising a mixture of at least 2 different hydrocarbons, is brought into contact with one side of a membrane across which a pressure differential exists, for a period of time sufficient to form two solutions; a permeate which passes through the membrane and a retentate. A useful review of threse processes may be found, for example, in an article titled "Novel Device and Process-Design Concepts for a Large-Scale Membrane Separation of Hydrocarbon Mixtures" by Michaels et al., Seventh World Petroleum Congress Proceedings, v. 4, p. 21 (1967). It is also well known to use membranes such as various cellulose esters including cellulose acetate, cellulose butyrate, cellulose propionate, etc. as well as cellulose ethers such as ethyl, propyl and amyl cellulose and the like for these processes. U.S. Patent No. 2,930,754 discloses the use of cellulose ester membranes such as cellulose acetate-butyrate for separating various hydrocarbons such as n-heptane from mixtures of n-heptane and isooctane and toluene from mixtures of toluene and isooctane, using membranes at pressure differentials ranging from about 10—100 psig (68,9—689 kPa) across the membrane. Where the feed is a mixture of toluene and isooctane, for example, the permeate is richer in toluene while the retentate is richer in isooctane. Using a series of membranes results in substantial separation of one hydrocarbon from the other. U.S. Patent No. 2,958,657 discloses the use of membranes made of ethyl cellulose for separating hydrocarbons such as n-heptane and isooctane wherein the temperature of the process is sufficiently hot to cause one of the hydrocarbons (in this case isooctane) to vaporize and form an isooctane-rich permeate. That is the hydrocarbon mixture is present in the feed zone in the liquid phase whereas the permeated hydrocarbons are removed as vapors. U.S. Patent No. 2,985,588 discloses hydrocarbon separation wherein the rate of permeability across or through the membrane is increased by adjusting the temperature of the process so that it is above the first order transition temperature of the polymeric material comprising the membrane. Membrane materials disclosed in this patent include cellulose triacetate, ethyl cellulose and irradiated polyethylene. U.S. Patent No. 2,960,462 discloses the use of dual layer membranes for hydrocarbon separation wherein the membrane is a composite of a higher permeation material and a lower permeation material such as cellulose esters and cellulose ethers or cellulose esters and irradiated polyethylene, etc. U.S. Patent No.

2,958,656 discloses that the rate of selective permeation of hydrocarbons through non-porous cellulose ester and acetate membranes can be increased many fold by contacting the membrane, during permeation, with a non-hydrocarbon solvent material including oxygenated compounds such as alcohols, ethers, alcohol ethers, ketones and chlorinated compounds. Similarly, U.S. Patent No. 2,947,687 discloses that the permeation rate through a non-porous, semipermeable cellulose ester membrane may be improved by contacting the membrane, during the permeation process, with a substituted hydrocarbon which is soluble in and has solvent power for the membrane. Still further, U.S. Patent No. 3,043,891 discloses a similar process and achieves a similar purpose by using aromatic and unsaturated non-oxygenated solvents. Unfortunately, adding a membrane solvent to the feed causes the membrane to soften and become very weak which often results in membrane rupture. Thus, U.S. 2,923,749 discloses adding saturated hydrocarbons to the feed mixture in order to act as a diluent thereby permitting increased permeation through the membrane at a lower temperature or pressure at the expense of membrane solubility. It is also important to note that all of these prior art processes maintain a vacuum on the permeate side of the membrane so that the permeation is removed as a vapor.

Thus, it has generally been concluded that cellulose acetate membranes are not, in general, suitable for organic feed mixtures, even though they appear good enough for other (i.e. aqueous separations) applications (c.f., *Reverse Osmosis* by Sourirajan, chapter 7, Academic press, 1970). In *Membrane Processes for Effluent Treatment* by D. Pepper, Chemistry and Industry, p. 834—836 (October 15, 1977), it is stated that commercially used reverse osmisis membranes are usually made from cellulose acetate or polyamide. Finally, the French have used acrylonitrile copolymer membranes in a reverse osmosis process for the ultrafiltration removal of impurities from used motor oils as disclosed in an article titled "Regeneration of Used Lubricating Oils by Ultra-Filtration" by D. Defives et al., Information Chimie, No. 175 p. 127—131 (March, 1978). This article also states that if these acrylonitrile copolymer membranes are used in the presence of a solvent immiscible with water, such as a hydrocarbon solvent or oil, they are not wetted and are thus impermeable to the hydrocarbon. In order to function in a non-aqueous medium, the article states that the membranes must be conditioned by using a solvent that is both miscible with water and with the solvent under consideration, such as acetone or a low molecular weight alcohol. However, it was found that if the oil contained a sufficient amount of surface-active agents and was under sufficient pressure, the oil succeeded in progressively wetting the moist membranes, thus eliminating the solvent conditioning required on a laboratory scale.

An authoritative review of separation and purification is given in the work: "Progress in Separation and Purification" edited by Perry and van Oss (Wiley-Interscience 1970). Volume 3 of the work deals with the use of membranes and discloses that the most useful membranes to convert for use with organic liquids are cellulose membranes, but that cellulose acetate or cellulose nitrate membranes are too soluble in too large a variety of organic solvents to be useful. It is further disclosed on pages 105 and 106 thereof that cellophane membrane (i.e. regenerated cellulose) is suitable for ultrafiltration but that the flux therethrough is slow, but the flux can be improved by treating cellophane membranes with relatively concentrated aqueous zinc chloride solution which increases the sizes of the pores in the membrane. Such $ZnCl_2$-treated cellophane membrane is stated to be quite easily convertible for use in the ultrafiltration of non-aqueous liquids. Unfortunately, treatment of cellophane membranes with zinc chloride destroys the membrane selectivity required for many hydrocarbon separations. It is stated that the conversion of untreated cellophane for use in the ultrafiltration of non-aqueous liquids is very difficult.

Perry and van Oss, *ibid*, refers to the difficulties of converting a hydrophilic membrane for use with non-aqueous liquids (volume 3, page 123), and describes a technique in which such a membrane is impregnated with a water-immiscible liquid by immersion for at least one hour in a water-ethanol mixture, followed by immersion in the following liquids: water-ethanol-butanol mixture; 100% butanol (renewed three times), and thereafter butanol-vegetable oil mixtures of progressively increasing vegetable oil concentrations (i.e. 70% butanol, 30% vegetable oil; 30% butanol, 70% oil; 100% vegetable oil), terminating with immersion in 100% vegetable oil. It is stated that the number of treating steps can be reduced if each solution contains a small amount of detergent. It is stated that cellophane (i.e. regenerated cellulose) as such could not be impregnated with any non-aqueous liquid that had been tried, although cellophane which had previously been treated with concentrated $ZnCl_2$ could be used for ultrafiltration after gradual conversion to hydrophobic liquids. Perry and van Oss highlight the fact that whereas most hydrophilic membranes can be converted for use in filtering non-aqueous liquids by treatment with a succession of liquids of decreasing polarity wherein each treating liquid is miscible with the preceding (more polar) liquid and with the succeeding (less polar) liquid, membranes of regenerated cellulose (e.g. cellophane) require treamment with a concentrated $ZnCl_2$ solution before they are useful for ultrafiltration. However, as stated *supra*,

such ZnCl₂ treatment destroys the selectivity of the membrane for many hydrocarbon separations.

US—A—1350532 (published some 50 years before the Perry and van Oss work) describes a process for converting any membrane (include a membrane made of metal) from a capability to filter a first liquid to a capability of filtering a different liquid which is immiscible with the first liquid, by treating the membrane with a succession of liquids of which each one is miscible with the preceding liquid and also with the succeeding liquid, the last liquid being either the liquid to be filtered or a liquid which is miscible therewith. Although US—A—1350532 purports to describe a process for converting any membrane as aforesaid, the sole example refers to a collodion membrane (collodion being a cellulose nitrate), and there is no reference whatsoever to regenerated cellulose, which perhaps is not surprising when regard is had to the difficulties of converting regenerated cellulose as highlighted in Perry and van Oss.

FR—A—2003796 discloses the use of cellulosic membranes for the separation of hydrocarbon solvents from solutions containing metal complex compounds by permeation under pressure. The sole cellulosic membrane which is specifically identified is cellulose acetate.

GB—A—1032355 discloses the separation of water from an aqueous hydrazone or azine solution by permeation through a hydrophilic membrane of cellulose acetate, regenerated cellulose, poly(vinylchloride), polyacrylonitrile, and it is stated that pretreatment of cellulose acetate or regenerated cellulose with (aqueous) hydrazine improves the selectivity, permeation rate, life and stability of the membrane. There is no disclosure or suggestion of treating a regenerated cellulose membrane with a sequence of solvents of decreasing polarity in order to convert the membrane to be suitable for selective permeation of organic liquids.

US—A—3223614 describes dialyzing wax dissolved in a solvent therefor through a polypropylene film of high crystallinity in order to recover a permeated wax solution of improved colour.

Various processes are well-known in the art for separating certain selected organic liquids from mixtures thereof with other liquid organic materials. This is accomplished through various absorption-desorption processes, solvent extraction, extractive distillation and various evaporation processes including gas stripping, flash evaporation and distillation. These processes generally require large amounts of thermal energy, pumps, tankage etc. The use of semi-permeable membranes to accomplish hydrocarbon separations consumes little, if any, thermal energy and consumes relatively little energy.

It is well known that wax-containing hydrocarbon oils such as lube oil fractions of petroleum oils must be dewaxed in order to obtain therefrom a useful product. There are many different ways and techniques of dewaxing these stocks, but for all practical purposes most commercial operations employ solvent dewaxing processes. In such processes the wax-containing oil is contacted with a cold dewaxing solvent or mixed with a dewaxing solvent at about the same temperature of the oils and then chilled in a scraped-surface chiller in order to produce a waxy slurry which is then fed to rotary vacuum or pressure drum filters to separate the solid particles of wax from the dewaxed oil/dewaxing solvent solution. The dewaxing solvent must then be removed from a mixture of dewaxed oil and solvent in order to obtain a dewaxed lube oil stock. This is done by thermal means such as passing the solvent-containing oil through a distillation tower or a series of distillation towers and/or evaporation zones in order to boil off the solvent from the oil. Residual amounts of solvent and oil are generally removed therefrom via steam or inert gas stripping. These solvent recovery operations require considerable amounts of thermal energy, pumps, tankage, etc. in order to remove the solvent from the dewaxed oil. It would be a great improvement to the art if a dewaxing process could be developed that included a method for separating the dewaxing solvent from the dewaxed oil by relatively low-energy consuming non-thermal means.

Warm-up deoiling of lube oil slack wax is well known in the art. In such a process the slack wax is warmed up and mixed with solvent to dissolve the foots oil in the slack wax, thereby forming a slurry comprising solid particles of wax and a solution of foots oil and solvent. This slurry is then filtered, usually in a rotary drum filter, to separate the foots oil solution from the solid wax particles as a filtrate. The foots oil-containing filtrate is then sent to solvent recovery operations to recover the solvent from the foots oil solution, with the recovered solvent then recycled back into the warm-up deoiling operation. The solvent recovery is accomplished by thermal means such as passing the solvent-containing oil through a distillation tower or a series of distillation towers and/or evaporation zones in order to boil off the solvent from the oil. Residual amounts of solvent and oil are generally removed therefrom via steam or inert gas stripping. These solvent recovery operations require considerable amounts of thermal energy, pumps, tankage etc. in order to remove the solvent from the foots oil. It would be an improvement to the art if a warm-up deoiling process could be developed that included a method for separating solvent from the foots oil by relatively low-energy consuming non-thermal means.

Therefore, because regenerated cellulose or cellophane membranes are not very soluble in most organic materials (including typical organic dewaxing solvents), are relatively low in cost, are readily available and relatively high in strength, it would be a significant improvement to the art if one could convert them to membranes useful for separating organic liquids without diminishing their natural selectivity. It would also be an improvement in the art if a solvent dewaxing process or a lube oil slack wax warm-up deoiling process could incorporate the use of these membranes in their solvent recovery steps and if the recovered organic liquid did not have to be removed from the permeate side of the cellulose membrane as a vapor.

According to the present invention, there is provided a method of converting a water-containing membrane to a membrane useful for separating organic liquids, the method comprising the steps of sequentially permeating the water-containing membrane with two or more solvents of progressively changing characteristics under pressure so that water in the water-containing membrane is displayed by a first solvent followed by sequentially displacing each preceding solvent in the membrane by the next successive solvent of different characteristics, wherein each solvent in the sequence is less polar than the preceding solvent in the sequence; any two solvents which are adjacent in the sequential series exhibit bulk liquid-liquid miscibility with each other; the final solvent exhibits bulk liquid-liquid miscibility with the material ultimately desired to be selectively permeated through the membrane; and the first solvent is a low molecular weight alcohol or ketone which exhibits bulk liquid-liquid miscibility with both the water in the said water-containing regenerated-cellulose and with the next lower-polarity solvent immediately following the first solvent, the method being characterised in that:

(a) the water-containing membrane is a regenerated-cellulose membrane having a molecular weight cut off (MWCO) of about 6,000 or less; and

(b) the said solvents are substantially free of zinc chloride.

Thus, as indicated in the preceding paragraph, the present invention provides a method of converting a water-containing membrane to a membrane useful for separating organic liquids, the method comprising the steps of sequentially permeating the water-containing membrane with two or more solvents of progressively changing characteristics under pressure so that water in the water-containing membrane is displaced by a first solvent followed by sequentially displacing each preceding solvent in the membrane by the next successive solvent of different characteristics, wherein each solvent in the sequence is less polar than the preceding solvent in the sequence; any two solvents which are adjacent in the sequential series exhibit bulk liquid-liquid miscibility with each other; the final solvent exhibits bulk liquid-liquid miscibility with the material ultimately desired to be selectively permeated through the membrane; and the first solvent is a low molecular weight alcohol or ketone which exhibits bulk liquid-liquid miscibility with both the water in the said water-containing regenerated-cellulose and with the next lower-polarity solvent immediately following the first solvent, wherein the water-containing membrane is a regenerated-cellulose membrane, and the said solvents are substantially free of zinc chloride.

The invention is based on the fact that it has now been discovered that hydrophilic, water-containing cellulose membranes can be converted to membranes useful for separating organic liquid by sequentially permeating the water-containing membrane with one or more solvents of decreasing polarity, under pressure, to first displace the water in the membrane with the first solvent and then sequentially displace each solvent in the membrane with the next, successive solvent of lower polarity, beginning with a low molecular weight alcohol or ketone which is miscible with water and ending with a solvent miscible (bulk miscibility) with both the higher polarity solvent immediately preceding it and the liquid organic material or solvent desired to be permeated through the membrane.

Further the above-recited modified regenerated cellulose is useful in organic liquid separation processes. Such processes typically comprise contacting mixtures of organic liquids under pressure, with one side of the modified semi-permeable, regenerated cellulose membrane previously described and permeating a portion of said mixture through said membrane to form a permeate and a retentate different in composition from each other and from said mixture. The mixture to be contacted with the membrane will be a feedstock comprising a mixture of one or more selected organic liquids with one or more different liquid organic materials. The regenerated cellulose membrane must selectively permeate said selected organic liquid or mixture thereof to produce a permeate richer in said selected organic liquid and a retentate leaner in said selected organic liquid than said feedstock. In a preferred embodiment the organic liquid selected to be permeated will comprise one or more solvents.

Such selective solvent permeation has particular application in a solvent dewaxing process wherein a waxy hydrocarbon oil is solvent dewaxed to form a slurry comprising solid particles of wax and a liquid mixture of dewaxed oil and dewaxing solvent, passing said slurry to filtration means for separating the solid wax particles from the dewaxed oil/solvent mixture to form a wax cake and a filtrate comprising said dewaxed oil/solvent mixture and contacting said filtrate, under pressure, with one side of the modified semi-permeable membrane made from regenerated cellulose as previously described that preferentially permeates at least a portion of said dewaxing solvent through said membrane to form a permeate richer in said solvent and a retentate leaner in said solvent than said filtrate. In a preferred embodiment the waxy hydrocarbon oil is a lube oil stock.

The selective solvent permeation also has applicability in recovering solvent used in slack wax deoiling processes comprising warming up cold slack wax and mixing it with solvent to dissolve the foots oil contained therein to form a slurry comprising solid particles of wax and a solution of foots oil and solvent, separating the solid wax from the foots oil-containing solution and contacting the solution with one side of a semi-permeable membrane made from regenerated cellulose that selectively permeates at least a portion of the solvent from the solution to form a permeate richer in solvent and a retentate leaner in solvent than said solution. It is understood that the slack wax is obtained by solvent dewaxing a waxy lube oil stock which produces a slurry comprising solid particles of wax and a mixture of dewaxed oil and solvent. This slurry is sent to solid-liquid separation means, such as a rotary drum filter, wherein the wax is deposited on the filter drum as a wax cake and the solution of dewaxed oil and solvent removed from the filter as a filtrate. The wax cake is washed with solvent while on the filter drum. The washed wax cake removed from the filter drum is known as "slack wax". This slack wax contains significant amounts of wax or waxy oil having a melting point broadly ranging from about 30°F. to 80°F. (—1.1 to 26.7°C) which is referred to in the art as "foots oil". It is necessary to remove the foots oil from the slack wax in order to produce a higher quality wax product having a higher melting point.

In all of the above by semi-permeable membrane it is meant that the membrane selectively permeates at least one component from a mixture of organic liquids.

The term "regenerated cellulose" describes cellulose which has been dissolved by virtue of the production of a soluble chemical derivative, such as cellulose xanthate, and subsequently reprecipitated. When prepared as a fiber, regenerated cellulose is commonly known as "viscose" or (viscose) rayon. As a film, regenerated cellulose is known by the generic term "cellophane". Thus, the regenerated cellulose or cellophane membranes useful in this invention do not include the relatively solvent-soluble cellulose ether and cellulose ester membranes described under the Prior Art, supra, which have not met with commercial success for hydrocarbon separations. The regenerated cellulose or cellophane membranes useful in this invention are commercially available, as hydrophilic membranes, from various companies for various aqueous ultra-filtration processes and are normally supplied containing a glycol such as glycerol. The glycerol is present as a hermectant in order to prevent drying out of the membrane. If the membrane is allowed to dry out, its internal cell structure irreversibly collapses, thereby rendering the membrane useless for ultrafiltration and reverse osmosis processes. If the membrane contains or is coated with a glycol or other hermectant, the glycol must be removed first. This may be done simply by soaking the membrane in water at room temperature in order to swell the membrane and to displace the entrained glycol. The water-containing membrane is then ready to be converted or modified into a semi-permeable membrane, useful for separating organic liquids according to the process of this invention. It is to be understood, that at no time must the membrane be allowed to dry out whether it contains water or a solvent or other liquid.

For obtaining rapid selective permeation, a thin membrane is employed which, in general, will be less than about 10 mils (0,254 mm, preferably less than 5 (0.127 mm) and still more preferably no greater than 2 mils (0,051 mm) in thickness. The membrane employed should be free from holes and other defects which would destroy its semi-permeable nature. If the membrane has pin-holes or the like, this will permit all of the organic liquids to leak through, thereby reducing or even eliminating the selectivity of the membrane.

As heretofore described, supra, the process of this invention comprises converting the hydrophilic membrane to a membrane useful for separating organic liquids by sequentially permeating the water-containing membrane with a series of solvents of decreasing polarity, under pressure, beginning with a low molecular weight alcohol or ketone which is miscible with water (bulk miscibility) and ending with a solvent miscible (bulk miscibility) with both the higher polarity solvent immediately preceding it and the organic material or solvent desired to be permeated through the membrane. It is preferred that the final solvent permeated through during the conversion treatment be of a size and shape similar to the material to be selectively permeated. It is also understood, of course, that none of the materials permeated through the membrane should react with, dissolve or otherwise adversely affect the membrane.

This may be more readily understood by the following sequential treatment used to convert a glycerol-containing regenerated cellulose membrane to a membrane capable of selectively separating MEK (methyl ethyl ketone) from a lube oil/MEK solution:

a. water soak membrane to swell same and displace the glycerine;

b. permeate methanol through the water-containing membrane under pressrue (i.e., 1379 to 2758 kPa, 200—400 psi); and

c. permeate MEK through the methanol-containing membrane under pressure (i.e., 1379 to 2758 kPa, 200—400 psi).

A membrane modified by this treating sequence (water-methanol-MEK) will also selectively permeate toluene or a mixture of MEK/toluene from a lube oil containing toluene or a mixture of MEK/toluene, respectively. Another illustrative, but non-limiting example is for the case where it is desired to separate propane from a dewaxed lube oil stock. To do this, step c. above can be followed by permeation of propane under pressure. However, propane will not permeate through the membrane if step c. is omitted. Thus, the sequence water-methanol-propane will not work. The sequence water-methanol-toluene-propane will work as will the sequence water-methanol-MEK-pentane-propane. Although it is preferred to follow the pentane permeation step with a propane permeation step, the propane permeation step can be accomplished in situ by using the oil/propane solution that one desires to remove the propane from. Thus, it should also be noted that the final solvent permeated through the membrane can be done in situ by contacting the membrane with a mixture containing said solvent (i.e., if it is desired to permeate MEK or a mixture of MEK/toluene, step c. above can be done in situe by contacting the membrane with the MEK or MEK/toluene containing organic liquid mixture or oil).

As has heretofore been stated, the first treating solvent permeated through the water-containing membranes is selected from the group consisting essentially of (a) one or more low molecular weight one to four carbon atom alcohols and (b) acetone or mixture thereof, said solvent exhibiting bulk liquid-liquid miscibility with water. Illustrative materials include methanol, ethanol, ispropanol, propanol, sec-butanol, isobutanol and acetone. Particularly preferred are the one to three carbon atom alcohols.

The treating solvents must be permeated through the membrane at a differential pressure across the membrane in order to displace the water from same. This pressure may range from about 100 to 800 psi (689.5 to 5516 kPa) or more. The maximum pressure should be somewhat less than the crushing pressure of the membrane while the practical lower pressure limit is controlled by that pressure needed to displace the material from the membrane. By way of example, the minimum pressure for water is about 100 psi (689.5 kPa). For MEK the minimum pressure is also about 100 psi (689.5 kPa). Preferred are pressure differentials across the membrane ranging from about 150—800 psi (1034—5516 kPa), while from about 200—400 psi (1379—2758 kPa) is particularly preferred. The second, successive solvent to be permeated through the membrane must be less polar than and exhibit bulk liquid-liquid miscibility with the first solvent and be more polar than the exhibit bulk liquid-liquid miscibility with the third solvent or material to be permeated. Thus, the solvent treatment sequentially progresses with solvents of continuously decreasing polarity wherein there is bulk liquid-liquid miscibility between any two adjacent solvents in the sequential series. An illustrative but non-limiting example of solvent polarity is illustrated in Table 1 which lists a number of solvents of decreasing polarity as a function of dielectric constant. The lower the dielectric constant, the less polar is the solvent. The term solvent as used herein, is not meant to exclude materials not normally regarded as solvents and includes materials such as naphthas, jet fuels, light oils, middle distillates etc.

As has heretofore been stated, supra, regenerated cellulose membranes useful for ultrafiltration processes are commercially available from a number of suppliers. These membranes are sold in terms of molecular weight cut-off ranges or equivalent "pore size". The pore size of a semi-permeable membrane cannot be categorically stated for many reasons. Pore size may be too small to be measured by physical methods. Pore sizes change with temperature and with each solvent saturated within the membrane due to swelling or shrinkage, etc. A common approach used in the industry is to distinguish solvents too large to diffuse through the membrane from those small enough to diffuse through it. This can be accomplished using a membrane "sizing" kit. A list of twelve standard compounds used to "size" membranes is shown in Table 2. These compounds are roughly spherical in shape. The molecular weight cut-off is quoted as the formula weight of the compound which is 98% retained by the membrane. Thus, a regenerated cellulose membrane sold as having a molecular weight cut-off of from between about 6,000 to 8,000 will, in general, not permit permeation of generally spherical protein molecules having a molecular weight exceeding from about 6,000 to 8,000. Thus, one must select that membrane having a pore size such that it will provide the desired selectivity after treatment. While not wishing to be held to any theory, it is believed that the solvent treatment of this invention alters the so-called "pore size". By way of illustration, it is believed a regenerated cellulose membrane having a molecular weight cut-off of from about 6,000 to about 8,000, has a pore size having a diameter of roughly about 24Å (2,4 nm). After treatment with the solvent series water-methanol-MEK, the pore size it is believed to shrink to a diameter of roughly about 12Å (1,2nm).

Brief description of the drawings

Figure 1 schematically illustrates a laboratory apparatus used in the examples of this invention.

Figure 2 illustrates permeation rate as a percent of oil in an oil/solvent feed as a function of regenerated cellulose membranes having three different molecular weight cut-offs.

Figure 3 illustrates an embodiment of a process of the instant invention employing modified, semi-permeable, regenerated cellulose.

Figure 4 illustrates another embodiment of a process of the instant invention employing modified, semi-permeable regenerated cellulose.

Examples

The invention will be more readily understood by reference to the following examples.

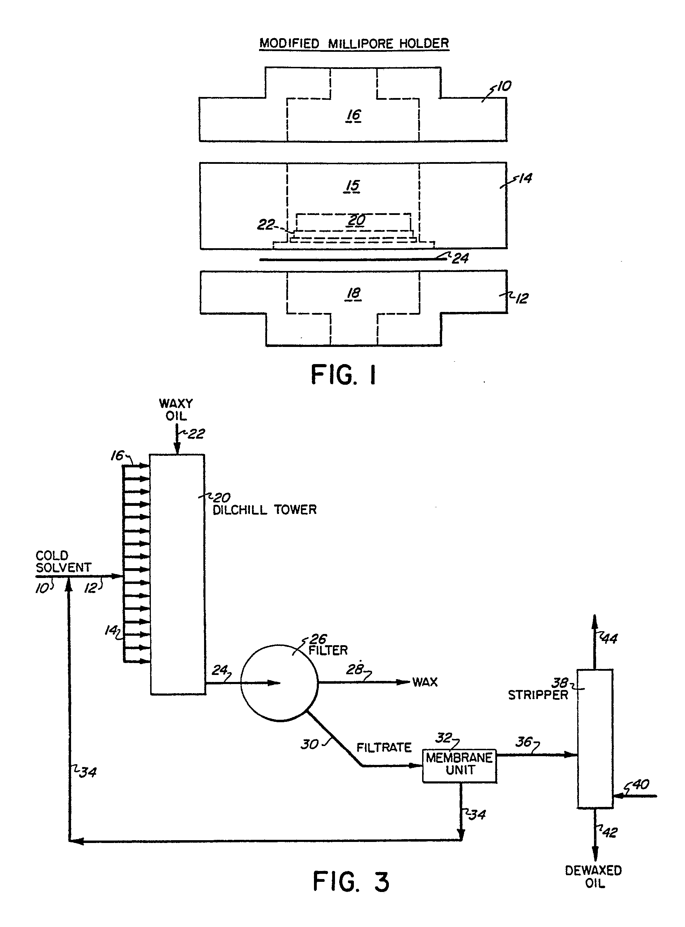

Referring to Figure 1, the laboratory apparatus used was a Millipore holder defined by top 10 and bottom 12 and containing spacer 14 to define respective liquid spaces 16 and 15 for the feed and 18 for the permeate, respectively. Spacer 14 contains a teflon coated, starshaped magnetic stirrer 20 separated from membrane 24 which is clamped between spacer 14 and Millipore bottom 12. Magnetic support 22 is porous, is approximately 1/10 inches (2.54 mm) thick and merely serves to prevent magnetic stirrer 20 from abrading membrane 24. The teflon coated starshaped magnetic stirrer is rotated by means not shown in order to prevent or minimize the boundary layer on the feed side of membrane 24. In operation, the feed liquid is introduced under pressure into liquid space 16 and one or more components of the feed selectively permeates through membrane 24 to form a permeate in liquid space 18. The permeate is continuously removed from the apparatus and analyzed. When used as a batch apparatus, the retentate is that material which did not permeate through the membrane and which has a composition different from both the feed and permeate.

Example 1

This example illustrates that even under a differential pressure across the membrane of up to 400 psi (2758 kPa), a regenerated cellulose membrane will not permeate MEK unless the membrane has been treated according to the process of this invention. In this experiment a Spectrum Medical Industries regenerated cellulose membrane designated as Spectrapore 1 having a nominal thickness of 0.002 inches (5.08×10$^{-3}$ cm) and a molecular weight cut-off (MWCO) of 6,000—8,000 was placed in a Millipore Filter Holder modified as described above. This Membrane contained glycerine to prevent it from drying out. Before it was placed in the Millipore Holder, the glycerine was removed by soaking in distilled water for over one hour. The apparatus was then charged with MEK under a pressure of 400 psi (2758 kPa) at a series of successive temperatures ranging from room temperature up to 130°C and held at 130°C for two days. After two days no MEK was observed to have permeated through the membrane.

Example 2

In this example, the same type of membrane and apparatus was used as that used in Example 1. The feed used was a mixture of 20 LV% of a dewaxed, paraffinic, lube oil raffinate having a viscosity of 600 SUS (129 cs or 129×10$^{-6}$ m²/s) at 100°F (37.8°C) in a 30/70 volume percent mixture of MEK/MIBK. Various samples of glycerol-wet membrane were pretreated at room temperature using the procedures and at the corresponding feed pressures shown in Table 3. Each membrane samples was pretreated in the apparatus and a given quantity of feed contacted with the retentate side of the membrane at a gauge pressrue of 400 psig (2758 kPa). The pressure at the permeate side of the membrane was one atmosphere. In all cases where permeate came through the membrane, it came through and was collected in the liquid form. The feed permeation temperature for each run is shown in Table 3. The feed was contacted with the membrane until the amount of permeate shown came through the membrane (5 days for run M-37), and then both the permeate and retentate were recovered. The permeate was then analyzed for oil solvent composition. For those cases where there was no observable permeate, the experiment was terminated after about 24 hours. Thus, that data show that it is necessary to permeate the solvents through the membrane, under pressure. Merely soaking the membrane in solvent is not adequate.

Example 3

In this experiment the apparatus heretofore described was used along with a Spectrum Medical Industries regenerated cellulose membrane designated as Spectrapore 3500 having a molecular weight cut-off (MWCO) of 3500 and a nominal thickness of 0.002 inches (5.08×10$^{-3}$ cm) which was pretreated by soaking in water to remove the glycerine, followed by placing the glycerol-free membrane in the apparatus and pretreating same with a sequential solvent treatment of methanol, followed by MEK, under a pressure of 400 psi (2758 kPa) at room temperature. The apparatus was charged with three different paraffinic, dewaxed lube oil raffinates in ketone or ketone/toluene solutions as shown in Table 4. For each run the (gauge) feed pressure was 400 psig (2758 kPa) and the pressure on the permeate side of the membrane was one atmosphere. The runs were terminated after 50 LV% of the feed had permeated through the membrane and the permeate analyzed for oil and solvent content. The results are shown in the Table. In each case the permeate comprised over 98 LV% solvent.

Example 4

In this experiment the membrane was a Spectrapore 1 such as that used in Example 1, but preconditioned by first soaking in water and then sequentially permeating the following solvents through the membrane at a temperature of 21°C and a gauge pressrue of 400 psig (2758 kPa) methanol-MEK-pentane-propane. The membrane was preconditioned while in the apparatus heretofore described and kept in contact with liquid propane at 150 psig (1034 kPa) in order to prevent the membrane from drying out. A feed comprising a mixture of 20 LV% bright stock in propane was charged to the apparatus contacting one side of the membrane at a gauge pressure of 600 psig (4137 kPa). A (gauge) pressure of 150 to 200 psig (1034 to 1379 kPa) was maintained on the permeate side of the membrane so that the propane permeated through as a liquid. At 50 LV% permeation of the feed the accumulated permeate contained about 95 LV% liquid propane.

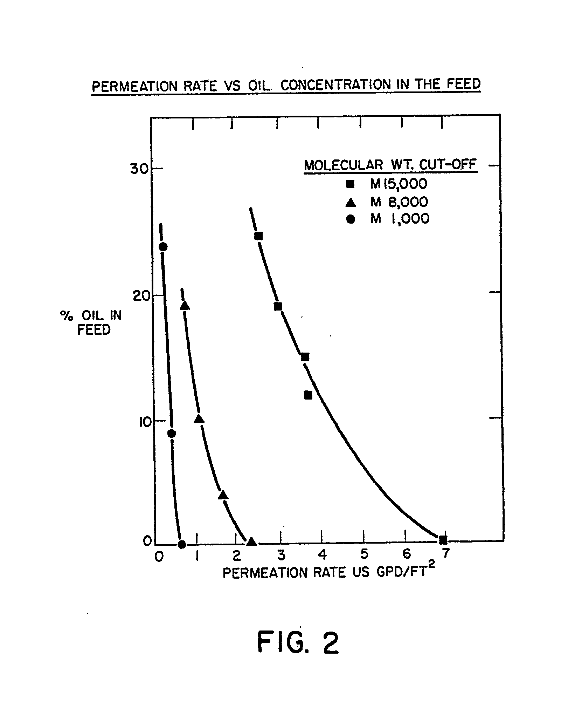

Example 5
This example illustrates the effect that the membrane pore size or molecular weight cut-off can have in processes employing this invention. Samples of membrane having molecular weight cut-offs shown in Figure 2 were preconditioned by soaking in water to remove the glycerine, followed by placing the glycerine-free membrane in an apparatus similar to that used for Examples 1—4. The glycerine-free membrane was then sequentially treated with methanol followed by MEK, at room temperature and a gauge pressure of 400 psig (2758 kPa). The feed was a solution of 10 grade lube oil stock (viscosity of 1,200—2,400 centipoise (1.2 to 2.4 Pa.s) at —18°C) in a 40/60 volumes/volume mixture of MEK/MIBK. The concentration of the oil in the feed varied as is shown in the Figure. Thus, it is seen that increasing molecular weight cut-off size of the membrane increases the permeation rate of the solvent.

TABLE 1
Dielectric constant of solvents in order of decreasing polarity

| Solvent | Dielectric constant, $\varepsilon$ | Temperature, °C. |
|---|---|---|
| Water | 80.4 | 25 |
| Methanol | 32.6 | 25 |
| Ethanol | 24.3 | 25 |
| Propanol | 20.1 | 25 |
| MEK | 18.5 | 20 |
| MIBK | 15.4 | 20 |
| Decanol | 8.1 | 20 |
| Ethyl Acetate | 6.0 | 25 |
| Chloroform | 4.8 | 20 |
| Ethyl Ether | 4.3 | 20 |
| Toluene | 2.4 | 25 |
| Carbon Tetrachloride | 2.2 | 20 |
| Pentane | 1.8 | 20 |
| Propane | 1.6 | 0 |

TABLE 2
Compounds for sizing membranes

| Compound | Formula weight | Diameter Å (.0,1 nm) |
|---|---|---|
| Urea | 60 | 5.4 |
| Glucose | 180 | 7.2 |
| Sucrose | 312 | 8.8 |
| Raffinose | 504 | 11.2 |
| Salmine | 6,000 | 24.0 |
| Cytochrome C | 12,000 | 25.0 |
| Lysozyme | 14,000 | 31 |
| Myoglobin | 17,000 | 43 |
| Chymotrypsinogen | 25,000 | 40 |
| Hemoglobin | 67,000 | 55 |
| APO Ferritin | 480,000 | 61 |
| Albumin | 67,000 | 145×50×22 |

TABLE 3
Modification of cellulose membrane

| Run No. | Pretreatment | Gauge pressure kPa (psig) | | Temperature °C. | Results |
|---|---|---|---|---|---|
| M-9 | None | 278.5 | (40) | 2 | No product |
| M-29 | Water soak | 2758.0 | (400) | 23 | No product |
| M-25 | Methanol soak | 2758.0 | (400) | 0 | No product |
| M-36 | Water followed by 5% methanol in water (soak) | 2758.0 | (400) | −7 | No product |
| M-35 | Water followed by 50% methanol in water (soak) | 2758.0 | (400) | 0 | No product |
| M-12 | Water soak then methanol permeation | 1379.0 | (200) | 0 | 10% permeate having 5% oil |
| M-37 | Water soak then methanol permeation followed by MEK permeation | 2758.0 | (400) | 0 | 23% permeate having 4.9% oil |
| | | | | | 75% permeate having 8.6% oil |

TABLE 4
Solvent separation from various lube stocks

| Run No. | Feed[1] | Solvent | Pressure (psi) | kPa | Temp °C | Permeate[2] oil content, LV% |
|---------|---------|---------|----------------|-----|---------|------------------------------|
| M-78 | Bright Stock[2] [5] | MEK/Toluene (70/30) | (400) | 2758 | 21 | 1.0 |
| M-52 | $129 \times 10^{-6}$ m²/s; (600)[3] | MEK/MIBK (30/70) | (400) | 2758 | −18 | 1.4 |
| M-68 | $32 \times 10^{-6}$ m²/s; (150)[4] | MEK/MIBK (50/50) | (400) | 2758 | −18 | 1.9 |

[1]Viscosity at 100°F (37.8°C) in m²/s (SUS).
[2]Average for 50% permeate yield.
[3]20% feed oil in 80% solvent.
[4]30% feed oil in 70% solvent.
[5]Viscosity or bright stock was $540 \times 10^{-6}$ m²/s (2500 SUS).

Example 6

In this experiment, the same apparatus and membrane were used as was used in Example 1. The membrane was also converted to a membrane useful in the process of this invention using the same sequential treatment shown in Example 3. The feed used was a 50/50 liquid volume mixture of MEK/toluene. The gauge feed pressure was 2758 kPa (400 psig) with a pressure of one atmosphere on the permeate side of the membrane. The permeation was done at a temperature of −16°C and yielded a permeate containing 42.8 LV% (liquid volume) of toluene and 57.2 LV% of MEK.

It should be understood that any solvent dewaxing process, wherein it is eventually desired to separate the solvent from the dewaxed oil, can be benefited by employing the modified semi-permeable regenerated cellulose membrane previously described. One such solvent dewaxing process involves indirect heat exchange in a scraped-surface chiller wherein waxy oil and solvent, at approximately the same temperature, are mixed in such a manner so as to effect complete and thorough solution of the oil in the solvent before being cooled or chilled. This solution is then cooled at a uniform, slow rate under conditions which avoid agitation of the solution as the wax precipitates out.

Another well-known method of solvent dewaxing processes involves conventional, incremental solvent addition. In this method, solvent is added to the oil at several points along a chilling apparatus. However, the waxy oil is first chilled without solvent until some wax crystallization has occurred and the mixture has thickened considerably. A first increment of solvent is introduced at this point in order to maintain fluidity, cooling continues and more wax is precipitated. A second increment of solvent is added to maintain fluidity. This process is repeated until the desired oil-wax filtration temperature is reached, at which point an additional amount of solvent is added in order to reduce the viscosity of the mixture to that desired for the filtration step. In this method the temperature of this incrementally added solvent should also be about the same as that of the wax/oil solvent mixture. If the solvent is introduced at a lower temperature, shock chilling of the slurry occurs resulting in the formation of small and/or acicula shaped wax crystals with attendant poor filter rate.

Still another well known process is the Dilchill® process wherein a waxy oil is introduced into an elongated, staged cooling zone or tower at a temperature above its cloud point and incrementally introducing a cold dewaxing solvent into said zone, along a plurality of points or stages therein, while maintaining a high degree of agitation so as to effect substantially instantaneous mixing of the solvent and wax/oil mixture as they progress through said zone. The basic concept is shown in U.S. Patent No. 3,773,650, the disclosures of which are incorporated herein by reference and shall hereinafter be referred to as dilution chilling. The processes of this invention are auto-refrigerative dewaxing processes wherein a waxy oil is mixed with a liquid autorefrigerant which is then allowed to evaporate from the oil under controlled conditions thereby chilling the oil by the latent heat of evaporation of the autorefrigerant.

Any solvent useful for dewaxing waxy petroleum oils may be used in the process of this invention. Representative examples of such solvents are (a) the aliphatic ketones having from 3 to 6 carbon atoms, such as acetone, methyl ethyl ketone (MEK) and methyl isobutyl ketone (MIBK), and (b) low molecular weight autorefrigerant hydrocarbons, such as ethane, propane, butane and propylene as well as mixtures of the foregoing and mixtures of the aforesaid ketones and/or hydrocarbons with

®Registered service mark of Exxon Research and Engineering Company.

aromatics such as benzene, xylene and toluene. In addition, halogenated, low molecular weight hydrocarbons such as the $C_1$—$C_4$ chlorinated hydrocarbons, e.g., dichloromethane, dichloroethane, and mixtures thereof, may be used as solvents either alone or in admixture with any of the forementioned solvents.

Any waxy petroleum oil stock or distillate fraction thereof may be dewaxed employing the process of this invention. Illustrative, but non-limiting examples of such stocks are (a) distillate fractions that have a boiling range within the broad range of about 500°F (260.0°C) to about 1300°F (704.4°C), with preferred stocks including the lubricating oil and speciality oil fractions boiling within the range of between about 550°F (287.8°C) and 1200°F (648.9°C), (b) bright stocks and de-asphalted resids having an initial boiling point above about 800°F (426.7°C) and (c) broad cut feed stocks that are produced by topping or distilling the lightest material off a crude oil leaving a broad cut oil, the major portion of which boils above about 500°F (260.0°C) or 650°F (343.3°C). Additionally any of these feeds may be hydrocracked prior to distilling, dewaxing or topping. The distillate fractions may come from any source such as the paraffinic crudes obtained from Aramco, Kuwait, the Pan Handle, North Louisiana, etc., naphthenic crudes, such as Tia Juana, Coastal crudes, etc., as well as the relatively heavy feed stocks, such as bright stocks having a boiling range of 1050+°F (565.6°C) and synthetic feed stocks derived from Athabasca Tar Sands, etc.

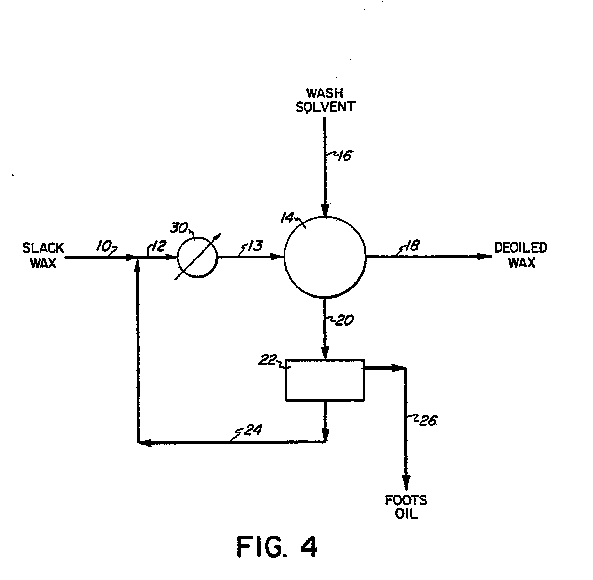

Referring to Figure 3, a waxy lube oil stock at a temperature above its cloud point is introduced into the top of Dilchill dewaxing tower 20 via line 22. Dilchill tower 20 contains 16 agitated stages for mixing the waxy oil with cold dewaxing solvent. Cold dewaxing solvent is introduced into tower 20 via lines 10 and 12, manifold 14 and multiple injection points 16. Each of the injection points introduces cold solvent into a particular stage wherein the cold dewaxing solvent is substantially instantaneously (i.e., one second or less) mixed with the waxy oil. As the waxy oil progresses down tower 20, it forms a slurry comprising solid particles of wax and a mixture of dewaxed oil and dewaxing solvent. This so-formed slurry is removed from tower 20 via line 24 and passed to filter 26. The cold slurry may also be additionally chilled in a scraped-surface chiller (not shown) before it is passed to filter 26. Filter 26 is a rotary drum filter wherein the wax is separated from the slurry thereby forming a cake of solid wax and a filtrate comprising a mixture of dewaxed oil and dewaxing solvent. The wax is removed from filter 26 via line 28 and sent to further processing. The filtrate is passed via line 30 to at least one membrane unit 32 wherein it contacts, under pressure, one side of a plurality of modified, semi-permeable membranes made from regenerated cellulose at a differential pressure across the membrane ranging from about 100 to 800 psi (689.5 to 5516 kPa). A substantial portion of the dewaxing solvent preferentially permeates through the membrane to form a solvent-rich permeate and an oil-rich retentate. The solvent-rich permeate is recycled back into tower 20 via line 34 and the permeate is passed to stripper 38 via line 36. In stripper 38 the retentate is contacted with a stripping gas entering via line 40 which removes residual solvent from the retentate to form a solvent-free dewaxed oil which is removed from the bottom of the stripper via line 42. The stripping gas containing the residual solvent leaves the top of the stripper via line 44.

It is understood, of course, that the membrane unit will contain a number of membranes which may be arranged in paralleled and/or series configurations.

When solvent deoiling slack wax, any solvent useful for dewaxing waxy petroleum oils may be used. In most cases, it is preferred to use the same solvent for dissolving the foots oil that was used in the original dewaxing process.

The foots oil-containing slack wax may be obtained from dewaxing any waxy petroleum oil stock or distillate fraction thereof as previously enumerated.

Referring to Figure 4, a solvent-containing slack wax, at a temperature of about 0°F. (−17.8°C), is withdrawn from a lube oil wax filter (not shown) via line 10. The solvent-containing slack wax stream contains foots oil having a melting point of about 70°F. (21.1°C) and comprises about 25 LV% (liquid volume) of oily wax and 75 LV% of a 30/70 volume mixture of MEK/MIBK. The solvent-containing slack wax stream in line 10 is mixed with permeate solvent from line 24 in an amount of about one volume of permeate solvent per volume of solvent-containing slack wax. The permeate solvent is a 30/70 volume mixture of MEK/MIBK, at a temperature of about 70°F. (21.1°C), which is withdrawn and recycled from membrane unit 22. Alternatively, the solvent can be added after heat exchanger 30. The mixture of slack wax and permeate solvent is passed to heat exchanger 30 via line 12 wherein it is warmed up to a temperature of about 70°F. (21.1°C) which dissolves the foots oil, but not the wax, to produce a slurry comprising solid particles of wax and a solution of foots oil. This slurry is passed to wax filter 14 via line 13 wherein the solid wax is separated from the foots oil solution. Filter 14 is a rotary drum filter wherein the solid wax is deposited on a rotating drum (not shown) in the form of a wax cake which is solvent washed on the drum. The wash solvent comprises a 30/70 volume mixture of MEK/MIBK, at a temperature of about 70°F. (21.1°C), which enters filter 14 via line 16. One volume of wash solvent is used for each three volumes of slurry entering the wax filter 14. The deoiled, washed wax is then removed from the filter via line 18. Approximately one volume of deoiled wax cake is produced for every six volumes of slurry entering the filter and the wax cake comprises approximately 30 volume % wax and 70 volume % solvent. In the wax filter the foots oil solution is separated from the deoiled wax as a foots oil filtrate. The wash solvent forms a wash filtrate. The foots oil and wash filtrates are combined in the filter and passed to membrane unit 22 via line 20. Membrane unit 22 contains a plurality of modified, semi-permeable membrane made from regenerated cellulose which preferentially permeates therethrough solvent from the combined filtrate to form a permeate richer in solvent and a retentate leaner in solvent than the combined filtrate feed fed to the unit. In membrane unit 22, the combined filtrate contacts one side of said membranes, at a temperature of about 70°F. (21.1°C) and under a differential pressure across the membranes of about 400 psi (2758 kPa). Each two volumes of combined filtrate entering the membrane unit produces one volume of permeate containing from about 1—3 volume % of foots oil and one volume of retentate containing about 15 volume % foots oil. The permeate is removed from the unit via line 24 and recycled back into the warm-up deoiling process. The retentate may be sent via line 26 to further processing to separate the solvent from the foots oil. The further processing may comprise membrane and/or thermal separation means. It is to be understood that membrane unit 22 is intended to include at least one unit containing a plurality of said modified membranes arranged in parallel and/or series configurations. A plurality of membrane units may be employed in the process of this invention.

Example 7

In this experiment the apparatus heretofore described was used along with a Spectrum Medical Industries regenerated cellulose membrane designated as Spectrapore 3500 having a molecular weight cut-off (MWCO) of 3500 and a nominal thickness of 0.002 inches ($5.08 \times 10^{-3}$ cm) which was pretreated by soaking in water to remove the glycerine, followed by a sequential solvent permeation of methanol and MEK under a pressure of 400 psi (2758 kPa) at room temperature. Samples of the so-treated membrane were then placed in the apparatus heretofore described. The apparatus was charged with a feed comprising a 5 LV% solution of a foots oil, having a melting point of about 70°F. (21.1°C), in a 45/55 volume solution of MEK/MIBK. The feed contacted the membrane under a gauge pressure of 400 psig and (2750 kPa) and at a temperature of 122°F (50.0°C). At 50% permeation, the permeate comprised a mixture of about 99 LV% solvent and 1 LV% foots oil.

The words "Teflon", "Cellophane" and "Millipore" are registered Trade Marks.

Conversion of units:

Permeation Rates in U.S. gallons/day/square foot (US GPD/FT$^2$) as in, e.g. Figure 2, are converted to litres/day/cm$^2$ by multiplying by $4.06 \times 10^{-3}$.

**Claims**

1. A method of converting a water-containing membrane to a membrane useful for separating organic liquids, the method comprising the steps of sequentially permeating the water-containing membrane with two or more solvents of progressively changing characteristics under pressrue so that water in the water-containing membrane is displaced by a first solvent followed by sequentially displacing each preceding solvent in the membrane by the next successive solvent of different characteristics, wherein each solvent in the sequence is less polar than the preceding solvent in the sequence; any two solvents which are adjacent in the sequential series exhibit bulk liquid-liquid miscibility with each other; the final solvent exhibits bulk liquid-liquid miscibility with the material ultimately desired to be selectively permeated through the membrane; and the first solvent is a low molecular weight alcohol or ketone which exhibits bulk liquid-liquid miscibility with both the water in the said water-containing regenerated-cellulose and with the next lower-polarity solvent immediately following the first solvent, the method being characterised in that:

(a) the water-containing membrane is a regenerated-cellulose membrane having a molecular weight cut off (MWCO) of about 6,000 or less; and

(b) the said solvents are substantially free of zinc chloride.

2. The method of claim 1 characterised in that the pressure differential across the membrane is in the range of from 100 to 800 psi (689.5 to 5516.0 kPa).

3. The method of claim 1 or claim 2 characterised in that said first solvent is selected from the $C_1$—$C_4$ alcohols, acetone and mixtures thereof.

4. The method of any one of claims 1 to 3 characterised in that said membrane is less than 10 mils (0.254 mm) thick.

5. The method of any one of claims 1 to 4 characterised in that the molecules of the final solvent have a size and shape similar to the ultimate material that is desired to be selectively permeated through said membrane.

6. The method of any one of claims 1 to 5 characterised in that the MWCO is about 3,500.

7. A process for at least partially separating at least one selected organic liquid from a feed comprising a mixture of organic liquids characterized by contacting the feed with one side of at least one semi-permeable membrane made by the method of any one of claims 1 to 6, with a differential pressure across the membrane and which membrane is selectively permeable with respect to the said one selected organic liquid.

8. A process according to claim 7 characterised in that the semi-permeable membrane (Fig. 3; 32) is selectively permeable to a dewaxing solvent of a mixture comprising dewaxed oil and dewaxing solvent, and in that the feed (Fig. 3; line 30) is at least a portion of a dewaxed oil/dewaxing solvent mixture obtained from a solvent dewaxing operation wherein a waxy hydrocarbon, petroleum or lube oil stock is solvent-dewaxed (Fig. 3; 20) with a dewaxing solvent to form a slurry (Fig. 3; line 24) comprising solid particles of wax and a mixture of dewaxed oil and dewaxing solvent, and wherein the solid particles of wax are separated (Fig. 3; 26) from the slurry to leave the said dewaxed oil/dewaxing solvent mixture, and forming a permeate (Fig. 3; line 34) richer in said dewaxing solvent than the mixture and a retentate (Fig. 3; line 36) leaner in said dewaxing solvent than the mixture.

9. A process according to claim 7 characterized in that the semi-permeable membrane (Fig. 4; 22) is selectively permeable to a dewaxing solvent of a solution of foots oil and dewaxing solvent, and in that the feed (Fig. 4; line 20) is at least a portion of a solution of foots oil and solvent obtained from a slack wax-deoiling operation wherein a mixture of foots oil containing slack wax and solvent is warmed or heated (Fig. 4; 30) to dissolve at least a portion of the foots oil to form a slurry (Fig. 4; line 13) comprising solid particles of wax and a solution of foots oil and solvent, and wherein the solid particles of wax are separated (Fig. 4; 14) from the slurry to leave the said foots oil and solvent solution (Fig. 4; line 20), and forming a permeate (Fig. 4; line 24) richer in said solvent than said solution and a retentate (Fig. 4; line 26) leaner in said solvent than said solution.

10. A process according to claim 8 or claim 9 characterized by recovering the solvent-enriched permeate (Fig. 3; line 34, Fig. 4; line 24) and recycling at least a portion thereof for use as at least part of the dewaxing solvent (Fig. 3; line 12, Fig. 4; line 12).

## Patentansprüche

1. Verfahren zur Umwandlung einer wasserhaltigen Membran in eine für die Trennung organischer Flüssigkeiten geeignete Membran, bei dem die wasserhaltige Membran nacheinander unter Druck mit zwei oder mehreren Lösungsmitteln mit sich fortschreitend ändernden Eigenschaften durchdrungen wird, so daß das Wasser in der wasserhaltigen Membran durch ein erstes Lösungsmittel verdrängt wird, woran sich eine aufeinanderfolgende Verdrängung jedes vorangehenden Lösungsmittels in der Membran durch das nächste nachfolgende Lösungsmittel mit anderen Eigenschaften anschließt, wobei jedes Lösungsmittel in der Reihenfolge weniger polar als das vorangehende Lösungsmittel in der Reihenfolge ist, alle in der Reihenfolge benachbarten Lösungsmittel miteinander mischbar sind, das letzte Lösungsmittel eine Flüssig/Flüssig- Mischbarkeit mit dem Material aufweist, das schließlich selektiv durch die Membran hindurchtreten soll, und das erste Lösungsmittel ein niedermolekularer Alkohol oder ein niedermolekulares Keton ist, das sowohl mit dem Wasser in der wasserhaltigen regenerierten Cellulose als auch mit dem nächsten weniger polaren Lösungsmittel, das dem ersten Lösungsmittel unmittelbar folgt, mischbar ist, dadurch gekennzeichnet, daß:

(a) die wasserhaltige Membran eine regenerierte Cellulosemembran mit einer Molekulargewichtssperre (MWCO) bei 6000 oder weniger ist und

(b) die Lösungsmittel im wesentlichen frei von Zinkchlorid sind.

2. Verfahren nach Anspruch 1, dadurch gekennzeichnet, daß die Druckdifferenz über der Membran im Bereich von 689,5 bis 5516,0 kPa liegt.

3. Verfahren nach Anspruch 1 oder 2, dadurch gekennzeichnet, daß das erste Lösungsmittel ausgewählt ist aus $C_1$—$C_4$-Alkoholen, Aceton und Mischungen derselben.

4. Verfahren nach einem der Ansprüche 1 bis 3, dadurch gekennzeichnet, daß die Membran weniger als 0,254 mm dick ist.

5. Verfahren nach einem der Ansprüche 1 bis 4, dadurch gekennzeichnet, daß die Moleküle des letzten Lösungsmittels eine Größe und Form ähnlich dem Abschließenden Material haben, das selektiv durch die Membran geführt werden soll.

6. Verfahren nach einem der Ansprüche 1 bis 5, dadurch gekennzeichnet, daß der MWCO-Wert etwa 3500 beträgt.

7. Verfahren zur mindestens teilweisen Abtrennung mindestens einer ausgewählten organischen Flüssigkeit aus einem Einsatzprodukt, das eine Mischung von organischen Flüssigkeiten umfaßt, dadurch gekennzeichnet, daß das Einsatzprodukt mit einer Seite mindestens einer semipermeablen Membran, die nach dem Verfahren gemäß einem der Ansprüche 1 bis 6 hergestellt ist, mit einer Druckdifferenz über der Membran kontaktiert wird, wobei die Membran selektiv für die ausgewählte organische Flüssigkeit permeabel ist.

8. Verfahren nach Anspruch 7, dadurch gekennzeichnet, daß die semipermeable Membran (Figur 3; 32) selektiv permeabel für ein Entparaffinierungslösungsmittel einer Mischung ist, die entparaffiniertes Öl und Entparaffinierungslösungsmittel enthält, daß das Einsatzprodukt (Figur 3; Leitung 30) mindestens ein Teil einer Mischung aus entparaffiniertem Öl und Entparaffinierungsmittel ist, die aus einem Lösungsmittelentparaffinierungsverfahren erhalten worden ist, wobei ein paraffinhaltiges Kohlenwasserstoff-, Erdöl- oder Schmieröleinsatzprodukt mit einem Entparaffinierungsmittellösungsmittel unter Bildung einer feste Paraffinteilchen und eine Mischung aus entparaffiniertem Öl und Endparaffinierungslösungsmittel aufweisenden Aufschlämmung (Figur 3; Leitung 24) lösungsmittelentparaffiniert wird (Figur 3; 20) und wobei die festen Paraffinteilchen von der Aufschlämmung unter Zurücklassen der Mischung aus entparaffiniertem Öl und Entparaffinierungslösungsmittel abgetrennt werden (Figur 3; 26), und daß ein Permeat (Figur 3, Leitung 34), das reicher an Entparaffinierungslösungsmittel als die Mischung ist, und ein Retentat (Figur 3, Leitung 36), das magerer an Entparaffinierungsmittel als die Mischung ist, gebildet werden.

9. Verfahren nach Anspruch 7, dadurch gekennzeichnet, daß die semipermeable Membran (Figur 4; 22) selektive permeabel für ein Entparaffinierungslösungsmittel einer Lösung von Endöl (foots oil) und Entparaffinierungslösungsmittel ist, daß das Einsatzprodukt (Figur 4; Leitung 20) mindestens ein Teil einer Lösung von Endöl und Lösungsmittel ist, die aus einem Rohparaffinentölungsverfahren erhalten worden ist, wobei eine Mischung aus Rohparaffin enthaltendem Endöl und Lösungsmittel zur Auflösung mindestens eines Teils des Endöls erwärmt oder erhitzt wird (Figur 4; 30), um eine feste Paraffinteilchen und eine Lösung von Endöl und Lösungsmittel aufweisende Aufschlämmung (Figur 4; 13) zu bilden, und wobei die festen Paraffinteilchen unter Zurücklassen der Endöl- und Lösungsmittellösung (Figur 4; Leitung 20) von der Aufschlämmung abgetrennt werden (Figur 4; 14), und daß ein Permeat (Figur 4; Leitung 24), das reicher an Lösungsmittel als die Lösung ist, und ein Retentat (Figur 4; Leitung 26), das magerer an Lösungsmittel als die Lösung ist, gebildet werden.

10. Verfahren nach Anspruch 8 oder 9, dadurch gekennzeichnet, daß das mit Lösungsmittel angereicherte Permeat (Figur 3, Leitung 34; Figur 4, Leitung 24) gewonnen und mindestens ein Teil davon zur Verwendung als mindestens ein Teil des Entparaffinierungslösungsmittels (Figur 3, Leitung 12; Figur 4, Leitung 12) zurückgeführt wird.

## Revendications

1. Procédé pour transformer une membrane contenant de l'eau en une membrane utilisable pour séparer des liquides organiques, le procédé comprenant les étapes successives de perméation à travers la mambrane contenant de l'eau de deux solvants ou plus de propriétés évoluant progressivement sous pression, de manière que l'eau présente dans la membrane contenant de l'eau soit déplacée par un premier solvant, opération suivie par le déplacement successif de chaque solvant précédent par celui qui le suit immédiatement de propriétés différentes, procédé dans lequel chaque solvant de la suite est moins polaire que le solvant précédent dans la suite; deux solvants quelconques adjacents dans la série successive présentent une miscibilité liquide/liquide importante l'un avec l'autre; le solvant final présente une miscibilité liquide/liquide important avec le produit dont on envisage la perméation sélective à travers la membrane; et le premier solvant est un alcool ou une cétone à bas poids moléculaire, qui présente une miscibilité liquide/liquide importante aussi bien avec l'eau présente dans ladite cellulose régénérée contenant de l'eau qu'avec le solvant à plus faible polarité qui suit immédiatement le premier solvant, ce procédé étant caractérisé en ce que:

(a) la membrane contenant de l'eau est une membrane de cellulose régénérée limitée aux masses moléculaires égales ou inférieures à 6000 (MML); et

(b) lesdits solvants sont sensiblement exempts de chlorure de zic.

2. Procédé selon la revendication 1, caractérisé en ce que la différence de pression à travers la membrane se situe entre 100 et 800 livres par pouce carré (689,5 et 5516,0 kPa).

3. Procédé selon la revendication 1 ou la revendication 2, caractérisé en ce que ledit premier solvant est choisi parmi les alcools en $C_1$ à $C_4$, l'acétone et leurs mélanges.

4. Procédé selon l'une quelconque des revendications 1 à 3, caractérisé en ce que ladite membrane a une épaisseur inférieure à 10 millièmes de pouce (0,254 mm).

5. Procédé selon l'une quelconque des revendications 1 à 4, caractérisé en ce que les molécules du dernier solvant ont une taille et une forme semblables à celles du produit dont on désire finalement la perméation sélective à travers ladite membrane.

6. Procédé selon l'une quelconque des revendications 1 à 5, caractérisé en ce que le MML est d'environ 3500.

7. Procédé pour séparer au moins partiellement au moins un liquide organique choisi d'un mélange de départ comprenant plusieurs liquides organiques, procédé caractérisé en ce qu'on met la mélange de départ en contact avec un côté d'au moins une membrane semi-perméable préparée par le procédé selon l'une quelconque des revendications 1 à 6, avec une différence de pression de part et d'autre de la membrane, ladite membrane présentant une perméabilité sélective pour le liquide organique choisi.

8. Procédé selon la revendication 7, caractérisé en ce que la membrane semi-perméable (figure 3. 32) est sélectivement perméable au solvant de déparaffinage d'un mélange comprenant de l'huile déparaffinée et du solvant de déparaffinage, et en ce que le mélange de départ (figure 3; conduit 30) est au moins une partie d'une mélange huile déparaffinée/solvant de déparaffinage, que l'on obtient lors d'une opération de déparaffinate au solvant dans laquelle on soumet hydrocarbure, pétrole ou huile lubrifiante paraffineux à un déparaffinage au solvant (figure 3; 20) avec un solvant de déparaffinage pour former une suspension (figure 3, conduit 24) comprenant des particules solides de paraffine et un mélange d'huile déparaffinée et de solvant de déparaffinage, et dans laquelle on sépare les particules solides de paraffine (figure 3; 26) de la suspension pour laisser ledit mélange huile déparaffinée/solvant de déparaffinage, et l'on forme un produite de perméation (figure 3; conduit 34) plus riche en ledit solvant de déparaffinage que le mélange et un rétentat (figure 3. conduit 36) plus pauvre en ledit solvant de déparaffinage que le mélange.

9. Procédé selon la revendication 7, caractérisé en ce que la membrane semi-perméable (figure 4; 22) est sélectivement perméable à un solvant de déparaffinage d'une solution d'huile de ressuage et d'un solvant de déparaffinage, et en ce que le mélange de départ (figure 4, conduit 20) est au moins une partie d'une solution d'huile de ressuage et de solvant obtenus lors d'une opération de déshuilage de paraffine huileuse dans laquelle on tiédit ou chauffe un mélange d'huile de ressuage contenant dela paraffine huileuse et du solvant (figure 4. 30) pour dissoudre au moins une partie de l'huile de ressuage et former une suspension (figure 4; conduit 13) comprenant des particules solides de paraffine et une solution d'huile de ressuage et de solvant, et dans laquelle on sépare les particules solides de paraffine (figure 4; 14) de la suspension pour laisser ladite solution d'huile de ressuage et de solvant (figure 4. conduite 20) et l'on obtient un perméat (figure 4; conduit 24) plus riche en ledit solvant que ladite solution et un rétentat (figure 4. conduit 26) plus pauvre en ledit solvant que ladite solution.

10. Procédé selon la revendication 8 ou la revendication 9, caractérisé en ce qu'on récupère le perméat enrichi en solvant (figure 3; conduit 34; figure 4; conduit 24) et qu'on en recycle au moins une partie pour constituer au moins une partie du solvant de déparaffinage (figure 3, conduit 12; figure 4, conduit 12).

MODIFIED MILLIPORE HOLDER

FIG. 1

FIG. 3

PERMEATION RATE VS OIL CONCENTRATION IN THE FEED

FIG. 2

FIG. 4